# EUROPÄISCHE PATENTSCHRIFT

(11) **EP 3 256 345 B1**
(45) Veröffentlichungstag und Bekanntmachung des Hinweises auf die Patenterteilung: **23.01.2019**
(21) Anmeldenummer: 16709972.0
(22) Anmeldetag: 04.02.2016
(51) Int. Cl.: B60R 1/08

(54) **FAHRERASSISTENZSYSTEM**
DRIVER ASSISTANCE SYSTEM
SYSTÈME D'ASSISTANCE DU CONDUCTEUR

(30) Priorität: 10.02.2015 DE 102015202330
(43) Veröffentlichungstag der Anmeldung: 20.12.2017
(73) Patentinhaber: Conti Temic Microelectronic GmbH, 90411 Nürnberg (DE); Continental Automotive GmbH, 30165 Hannover (DE)
(72) Erfinder: KRÖKEL, Dieter, 88097 Eriskirch (DE); ROTHENHÄUSLER, Konrad, 88147 Achberg (DE); ROSKONI, Ulrich, 61206 Wöllstadt (DE); SCHMALRIEDE, Tobias, 60321 Frankfurt (DE)
(86) Internationale Anmeldenummer: PCT/DE2016/200073
(87) Internationale Veröffentlichungsnummer: WO 2016/127993

(56) Entgegenhaltungen:
- EP-A1- 1 363 237
- EP-A2- 2 042 374
- EP-A2- 2 045 133

## Beschreibung

Die Erfindung betrifft ein Fahrerassistenzsystem für ein Kraftfahrzeug, insbesondere für einen Lastkraftwagen, umfassend eine Umfeldkamera mit einem Bildsensor und mit einer Optik, umfassend eine Bildaufbereitungseinheit und umfassend ein Anzeigeelement im Innenraum des Kraftfahrzeuges, die gemeinsam einen digitalen Außenspiegel ausbilden.

Aktuell werden große Anstrengungen unternommen, um den Kraftstoffverbrauch von Kraftfahrzeugen zu reduzieren. Eine Möglichkeit dies zu erreichen besteht dabei darin, entsprechende Kraftfahrzeuge derart zu gestalten, dass diese einen möglichst geringen Luftwiderstandsbeiwert und eine möglichst geringe Anströmfläche aufweisen. Zu diesem Zweck ist es bekannt, den klassischen Außenspiegel oder Seitenspiegel durch einen elektronischen oder digitalen Außenspiegel bzw. Seitenspiegel zu ersetzen, der im Wesentlichen durch eine Kamera und ein Anzeigeelement, meist einem LCD-Display gebildet wird, wobei das Anzeigeelement im Fahrgastraum des Kraftfahrzeuges angeordnet ist und wobei die Umfeldkamera im Wesentlichen den Bereich im Umfeld des Kraftfahrzeuges erfasst, der ansonsten durch den klassischen Außenspiegel bzw. Seitenspiegel für einen Fahrzeugführer sichtbar ist.

Derartige digitale Außenspiegel oder Fahrerassistenzsysteme, die das zugrundeliegende Konzept nutzen, sind beispielsweise in der EP 2 045 133 A2, der EP 2 042 374 A2 und der EP 1 363 237 A1 beschrieben.
Ausgehend hiervon liegt der Erfindung die Aufgabe zugrunde, ein vorteilhaft ausgestaltetes Fahrerassistenzsystem anzugeben, welches den klassischen Außenspiegel ersetzt.

Diese Aufgabe wird erfindungsgemäß gelöst durch ein Fahrerassistenzsystem mit den Merkmalen des Anspruchs 1. Bevorzugte Weiterbildungen sind in den rückbezogenen Ansprüchen enthalten.

Ein entsprechendes Fahrerassistenzsystem ist hierbei für ein Kraftfahrzeug und insbesondere für einen Lastkraftwagen ausgelegt und umfasst eine Umfeldkamera mit einem Bildsensor sowie mit einer Optik, eine Bildaufbereitungseinheit sowie ein Anzeigeelement im Innenraum des Kraftfahrzeuges, die gemeinsam einen digitalen Außenspiegel oder Seitenspiegel ausbilden. Dabei ist der digitale Außenspiegel derart eingerichtet, dass zumindest zwei Sichtfeldbereiche, nämlich ein erster Sichtfeldbereich und ein zweiter Sichtfeldbereich, mit unterschiedlichen Abbildungsmaßstäben abgebildet werden.

Auf diese Weise ist es unter anderem möglich, dafür zu sorgen, dass die mittels des Anzeigeelements wiedergegebenen Bildinformationen im Wesentlichen das wiedergeben, was ein Fahrzeugführer mittels eines klassischen Außenspiegels zu sehen bekäme. Hierbei gilt es zu bedenken, dass bei Personenkraftwagen häufig der klassische Außenspiegel oder Seitenspiegel zwei Bereiche aufweist, wobei ein Bereich die Umgebung des Kraftfahrzeugs getaucht wiedergibt, um auf diese Weise einen größeren Sichtbereich mittels des Spiegels abdecken zu können. Auf diese Weise soll der sogenannte tote Winkel möglichst klein gehalten werden. Diese Art der Umgebungsabbildung lässt sich prinzipiell digital oder elektronisch nachahmen, indem zwei Sichtfeldbereiche mit unterschiedlichen Abbildungsmaßstäben abgebildet werden.

Bevorzugt wird diese Ausgestaltung eines elektronischen Außenspiegels jedoch bei Lastkraftwagen oder Bussen eingesetzt, bei denen der klassische Außenspiegel oder Seitenspiegel häufig mehrere Einzelspiegel, Spiegelsegmente oder Spiegelelemente umfasst, wobei die einzelnen Spiegelsegmente oder Einzelspiegel zur Überwachung unterschiedlicher Bereiche in der Umgebung eines entsprechenden Lastkraftwagens bzw. Busses vorgesehen sind und die Umgebung mit unterschiedlicher Verzerrung oder Verzeichnung wiedergeben. Die einzelnen Spiegelelemente oder Spiegelsegmente erfüllen somit quasi unterschiedliche Funktionen, welche bevorzugt durch einen hier vorgestellten elektronischen Spiegel und insbesondere durch das hier vorgestellte Fahrerassistenzsystem in ähnlicher Weise umgesetzt werden.

Hierbei ist es unter anderem günstig, auch mehrere Anzeigeelemente, Anzeigebereiche oder sogar mehrere Displays im Fahrgastraum anzuordnen, so dass quasi jedes Spiegelelement oder jeder Einzelspiegel des klassischen Außenspiegels durch ein eigenes Display, ein eigenes Anzeigeelement oder zumindest einen eigenen Anzeigebereich ersetzt wird. Diese sind zudem bevorzugt ähnlich angeordnet, wie die Elemente des klassischen Außenspiegels, so dass sich ein Fahrzeugführer oder Fahrer nicht umstellen oder umgewöhnen muss, sondern quasi intuitiv mit dem System zurechtkommt.

Gemäß einer zweckdienlichen Ausgestaltung ist der digitale Außenspiegel des Weiteren derart eingerichtet, dass zumindest zwei Sichtfeldbereiche mit unterschiedlichen Winkelauflösungen abgebildet werden. Auf diese Weise lässt sich z.B. ein größerer Winkelbereich auf einer gegebenen Abbildungsfläche abbilden und/oder es lassen sich besonders relevante Winkelbereiche mit erhöhter Auflösung überwachen.

Zweckdienlich ist es weiter, eine Umfeldkamera einzusetzen, deren Bildsensor zur Erfassung von elektromagnetischer Strahlung im Wellenlängenbereich zwischen etwa 300 nm und etwa 2.000 nm ausgebildet ist. Entsprechende Umfeldkameras werden bereits im Kraftfahrzeugbereich eingesetzt, um z.B. den Verkehr im Vorfeld des Kraftfahrzeuges zu überwachen, und dementsprechend muss für das hier vorgestellte Fahrerassistenzsystem nicht eigens eine Umfeldkamera entworfen und entwickelt werden.

Je nach Anwendungszweck ist es dabei zweckmäßig, die Umfeldkamera mit einem Wellenlängen-Bandpassfilter auszustatten, um auf diese Weise eine Umfeldkamera zu realisieren, die im Wesentlichen auf sogenanntes sichtbares Licht im Bereich von etwa 400 nm bis etwa 750 nm reagiert.

Alternativ lässt sich die Umfeldkamera so ausgestalten, dass diese nicht nur auf Licht im sogenannten sichtbaren Bereich reagiert, sondern darüber hinaus auch auf sogenanntes Infrarotlicht, zum Beispiel im Bereich um 900 nm, so dass die Umfeldkamera bei Nacht oder bei entsprechenden Umgebungslichtbedingungen zudem oder alternativ nach dem Prinzip eines Infrarot-Nachtsichtgerätes arbeitet, um auf diese Weise auch bei ungünstigen Umgebungslichtbedingungen Objekte im Umfeld des Kraftfahrzeuges ausmachen zu können.
Ist eine entsprechende Infrarot-Empfindlichkeit der Umfeldkamera vorgesehen, so ist es gemäß einer Ausführungsvariante zudem vorgesehen, die Umfeldkamera durch eine Infrarot-Lichtquelle zu ergänzen, welche entsprechendes Licht in den Sichtfeldbereich der Umfeldkamera abstrahlt.

Zur Realisierung unterschiedlicher Abbildungsmaßstäbe wird erfindungsgemäß entweder der Bildsensor der Umfeldkamera derart gestaltet, dass dieser zwei Bereiche aufweist, in denen die die Sensorfläche ausbildenden Pixel unterschiedlich gestaltet sind, oder wird ein Bildsensor eingesetzt, der aus im Wesentlichen identischen Pixeln aufgebaut ist und dementsprechend werden dann die unterschiedlichen Abbildungsmaßstäbe mittels der Optik realisiert. Hierbei werden vorzugsweise Verzeichnungen, die sich bei einer entsprechenden Optik typischerweise nicht vermeiden lassen und in anderen Anwendungsfällen als störend angesehen werden, gezielt genutzt, um auf möglichst einfache Weise unterschiedliche Abbildungsmaßstäbe zu realisieren.
So ist es gemäß einer Ausführungsvariante der Umfeldkamera für das Fahrerassistenzsystem vorgesehen, eine einfache rotationssymmetrische Optik einzusetzen, diese jedoch quasi gegen den Bildsensor verschoben anzuordnen, so dass die optische Achse der Optik nicht wie üblich durch den Flächenmittelpunkt der Sensorfläche des Bildsensors verläuft, sondern in Richtung eines Bildsensorrandes versetzt dazu. Gleichzeitig wird die Optik im Vergleich zum Stand der Technik vergrößert ausgeführt, so dass die Optik trotz der versetzten Anordnung die gesamte Sensorfläche des Bildsensors im Wesentlichen abdeckt.
Bevorzugt wird allerdings eine nicht-rotationssymmetrische Optik eingesetzt, die zudem bevorzugt derart ausgestaltet ist, dass der erste Sichtfeldbereich wie von einem Weitwinkelobjektiv auf einen ersten Bereich der Sensorfläche des Bildsensors abgebildet wird und dass der zweite Sichtfeldbereich des digitalen Außenspiegels wie von einem Teleobjektiv auf einem zweiten Bereich der Sensorfläche abgebildet wird. Der erste Bereich dient dann vor allem zur Abdeckung eines möglichst großen Bereiches im Umfeld des Kraftfahrzeuges, also zur Umsetzung einer guten Übersicht, die insbesondere auch beim Rangieren von Vorteil ist. Der zweite Bereich hingegen dient in erster Linie zur Überwachung des rückwärtigen Verkehrs, also zur Erkennung anderer Verkehrsteilnehmer, die sich in einem etwas größeren Abstand hinter dem Kraftfahrzeug befinden.

Zweckdienlicherweise deckt dabei der zweite Sichtfeldbereich einen Winkelbereich bis etwa 25° ab, wobei sich der entsprechende Winkelbereich an die zur Mittellängsachse des Kraftfahrzeuges im Wesentlichen parallele Flanke des Kraftfahrzeuges anschließt und quasi nach hinten in Richtung rückwärtiger Verkehr gerichtet ist. An den zweiten Sichtfeldbereich schließt sich dann der erste Sichtfeldbereich an, der typischerweise einen Winkelbereich von etwa 75° bis 100° abdeckt, für einige Anwendungszwecke jedoch auch einen Winkel größer 150°, sodass der durch den elektronischen Außenspiegel abgedeckte Winkel auch größer 180° sein kann und in einigen Fällen auch ist.

In einigen Ausführungsvarianten des Fahrerassistenzsystems weist dieses des Weiteren eine Bildauswerteeinheit auf, mit deren Hilfe die Bilddaten der Umfeldkamera aufbereitet und/oder ausgewertet werden. Dabei ist es z.B. vorgesehen, mittels der Auswerteeinheit eine Objekterkennung zu realisieren, mit deren Hilfe Personen im Umfeld des Kraftfahrzeuges erkannt werden und dann bei der Wiedergabe der Bilddaten mittels des Anzeigeelements, also insbesondere mittels eines LCD-Displays im Fahrgastraum, optisch hervorgehoben werden.

Nicht nur in einem solchen Fall ist es darüber hinaus von Vorteil, für die unterschiedlichen Abbildungsmaßstäbe eine günstige Relation zu wählen, insbesondere ein Verhältnis, das einem ganzzahligen Vielfachen von zwei entspricht. Hierdurch lassen sich dann entsprechend generierte Bilddaten einfacher elektronisch weiterverarbeiten.

Allerdings lässt sich dies nur bedingt mit einer Optik umsetzen und dementsprechend wird typischerweise insbesondere im Übergangsbereich zwischen den beiden Sichtfeldbereichen ein sich über den Übergangsbereich allmählich ändernder Abbildungsmaßstab gegeben sein. Dies führt unter anderem zu unerwünschten, verzerrten Abbildungen, weswegen in solchen Fällen bevorzugt in der Bildaufbereitungseinheit eine Art Rektifizierung vorgenommen wird. Hierbei wird der Abbildungsmaßstab und insbesondere die Winkelauflösung in einigen Bereichen durch Interpolation künstlich erhöht und in anderen Bereichen quasi durch eine Zusammenfassung von Pixeln künstlich abgesenkt, um auf diese Weise dann für jeden Sichtfeldbereich einen einheitlichen Abbildungsmaßstab oder eine einheitliche Winkelauflösung rechnerisch zu realisieren, mit einem scharfen, sprungartigen Übergang zwischen den beiden Sichtfeldbereichen.

Die bisherigen Ausführungen und Beschreibungen beziehen sich ausschließlich auf eine Ersetzung eines Außenspiegels. Da jedoch typischerweise auf zwei Seiten eines Kraftfahrzeuges Außenspiegel oder Seitenspiegel positioniert werden, ist das Fahrerassistenzsystem in der Regel derart gestaltet, das dieses zwei klassische Seitenspiegel ersetzt. Dementsprechend umfasst dieses typischerweise zwei Umfeldkameras, die einander gegenüberliegend an zwei Seiten des Kraftfahrzeuges positioniert sind, sowie zwei dazugehörige Anzeigeelemente. Die Aufbereitung und/oder Auswertung der Bilddaten der Umfeldkameras wird jedoch bevorzugt lediglich mittels einer Elektronikeinheit vorgenommen.

Ausführungsbeispiele der Erfindung werden nachfolgend anhand einer schematischen Zeichnung näher erläutert. Darin zeigen:
- FIG 1: in einem Blockschaltbild ein Lastkraftwagen mit einem Fahrerassistenzsystem umfassend eine Umfeldkamera mit einer Optik und einem Bildsensor,
- FIG 2: in einer Aufsicht der Lastkraftwagen mit zwei angedeuteten Sichtfeldbereichen der Umfeldkamera,
- FIG 3: in einer Aufsicht eine Ausgestaltung der Umfeldkamera zur Realisierung unterschiedlicher Winkelauflösungen für die zwei Sichtfeldbereiche mit einem Abbildungsprinzip für einen der beiden Sichtfeldbereiche,
- FIG 4: in der Aufsicht die Ausgestaltung der Umfeldkamera zur Realisierung unterschiedlicher Winkelauflösungen für die zwei Sichtfeldbereiche mit einem Abbildungsprinzip für den anderen der beiden Sichtfeldbereiche,
- FIG 5: in der Aufsicht eine alternative Ausgestaltung der Umfeldkamera zur Realisierung unterschiedlicher Winkelauflösungen für die zwei Sichtfeldbereiche mit einem Abbildungsprinzip für den einen der beiden Sichtfeldbereiche sowie
- FIG 6: in der Aufsicht die alternative Ausgestaltung der Umfeldkamera zur Realisierung unterschiedlicher Winkelauflösungen für die zwei Sichtfeldbereiche mit einem Abbildungsprinzip für den anderen der beiden Sichtfeldbereiche.

Einander entsprechende Teile sind in allen Figuren jeweils mit den gleichen Bezugszeichen versehen.

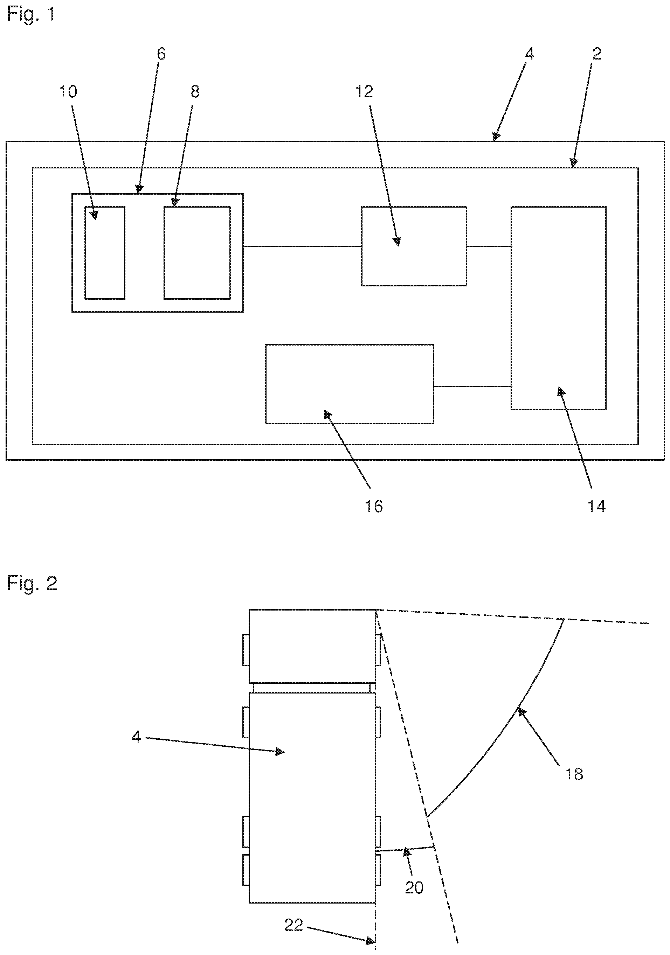

Ein nachfolgend exemplarisch beschriebenes und in Fig. 1 skizziertes Fahrerassistenzsystem 2 ist in einem Lastkraftwagen 4 verbaut und dient zur Unterstützung eines Fahrzeugführers oder Fahrers bei der Führung des Lastkraftwagens 4. Es umfasst eine Umfeldkamera 6 mit einem Bildsensor 8 und mit einer Optik 10, eine Bildaufbereitungseinheit 12, eine Bildauswerteeinheit 14 sowie ein als LCD-Bildschirm 16 ausgestaltetes Anzeigeelement, wobei mithilfe dieser Baugruppen ein elektronischer oder digitaler Außenspiegel realisiert ist, der den klassischen Außenspiegel oder Seitenspiegel ersetzt.

Dazu ist die Umfeldkamera 6, oder zumindest die Optik 10 der Umfeldkamera 6, in etwa in dem Bereich positioniert, in dem üblicherweise der klassische Seitenspiegel angeordnet ist, und die Optik 10 der Umfeldkamera 8 ist in Richtung des Hecks des Lastkraftwagens 4 ausgerichtet, sodass mit Hilfe des digitalen Außenspiegels, so wie in Fig. 2 angedeutet, ein hinterer und seitlicher Bereich des Umfeldes des Lastkraftwagens 4 mittels der Umfeldkamera 6 erfasst wird und auf dem LCD-Bildschirm 16, der im Fahrgastraum oder Führerhaus des Lastkraftwagens 4 angeordnet ist, wiedergegeben wird.

Hierbei weist der LCD-Bildschirm 16 einen oberen Bereich und einen unteren Bereich auf, wobei im unteren flächenmäßig größeren Bereich ein erster Sichtfeldbereich 18 im Betrieb wiedergegeben wird und wobei im flächenmäßig kleineren oberen Bereich ein zweiter Sichtfeldbereich 20 dargestellt wird. Auf diese Weise wird auf dem LCD-Bildschirm 16 im Wesentlichen genau das wiedergegeben, was ein Fahrer durch einen klassischen Außenspiegel hindurch beobachten würde, der typischerweise aus zwei Einzelspiegeln aufgebaut ist, die ebenfalls unterschiedlich große Flächen, also Spiegelflächen, aufweisen.

Die Bilddaten für die beiden Bereiche des LCD-Bildschirm 16 werden weiter mithilfe lediglich eines Bildsensors 8 und einer Optik 10 generiert, wobei der Bildsensor 8 im Wesentlichen aus identischen Pixeln aufgebaut ist, die insbesondere eine einheitliche Sensorfläche aufweisen.

Dennoch ist der Bildsensor 8, zumindest virtuell, in zwei Bereiche aufgeteilt, derart, dass die mittels der Pixel des ersten Bereichs P18 generierten Bilddaten auf dem unteren Bereich des LCD-Bildschirm 16 wiedergegeben werden und dass die mittels der Pixel des zweiten Bereichs P20 generierten Bilddaten auf dem oberen Bereich des LCD-Bildschirm 16 dargestellt werden. Für die beiden Bereiche P18, P20 sind dabei unterschiedliche Abbildungsmaßstäbe, genauer unterschiedliche Winkelauflösungen, realisiert.

Hierzu ist die Optik 10 derart ausgestaltet, dass der erste Sichtfeldbereich 18 wie von einem Weitwinkelobjektiv auf dem ersten Bereich der Sensorfläche abgebildet wird und dass der zweite Sichtfeldbereich 20 wie von einem Teleobjektiv auf dem zweiten Bereich der Sensorfläche abgebildet wird.

Der zweite Sichtfeldbereich 20 erstreckt sich dabei über einen Winkel von 25° ausgehend von der Flanke 22 des Lastkraftwagens 4, sodass hierdurch insbesondere der rückwärtige Verkehr erfasst wird. Der erste Sichtfeldbereich 18 schließt sich an den zweiten Sichtfeldbereich 20 unmittelbar an und erstreckt sich über einen Winkel von 60°, sodass in der Summe ein Winkel von 85° erfasst ist.

Wie bereits zuvor erwähnt, ist für die beiden Sichtfeldbereiche 18,20 jeweils eine eigene Winkelauflösung realisiert. Dabei entspricht die Winkelauflösung im zweiten Sichtfeldbereich 20 der dreifachen Winkelauflösung im ersten Sichtfeldbereich 18. Da für die Umfeldkamera 6 eine einzige Optik 10 genutzt wird und der Gestaltung der Optik 10 gewisse technische Grenzen gesetzt sind, ist jedoch für die beiden Sichtfeldbereiche 18,20 kein über den jeweiligen gesamten Sichtfeldbereich 18,20 einheitlicher Wert für die Winkelauflösung gegeben, stattdessen weist die Optik 10 im Übergangsbereich, also im Bereich des Übergangs zwischen den beiden Sichtfeldbereichen 18,20, eine sich quasi allmählich ändernde Winkelauflösung auf.

Hierdurch bedingte Verzeichnungen oder Verzerrungen werden dann im Rahmen einer Bilddatenaufbereitung in der Bildaufbereitungseinheit 12 herausgerechnet. Hierzu wird eine Art Rektifizierung vorgenommen, bei der der Verlauf der Winkelauflösung durch eine elektronische Nachbearbeitung der Bilddaten abgeändert wird, sodass in den angezeigten Bildern jeder Sichtfeldbereich 18,20 über den gesamten jeweiligen Sichtfeldbereich 18,20 hinweg eine einheitliche Winkelauflösung aufweist und dementsprechend ein sprunghafter Übergang zwischen den beiden Sichtfeldbereichen 18,20 gegeben ist. Hierzu wird die winkelabhängige Winkelauflösung im zweiten Sichtfeldbereich 20 an der Grenze zum ersten Sichtfeldbereich 18 hochgerechnet und im ersten Sichtfeldbereich an der Grenze zum zweiten Sichtfeldbereich 20 herunter gerechnet, wobei hierfür an sich bekannte Algorithmen zur Umskalierung von Bilddaten herangezogen werden.

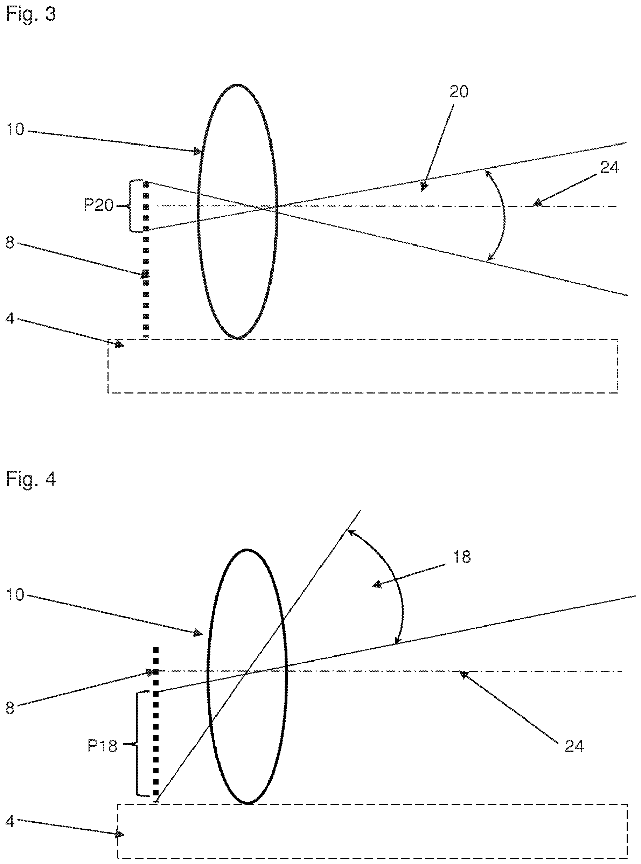

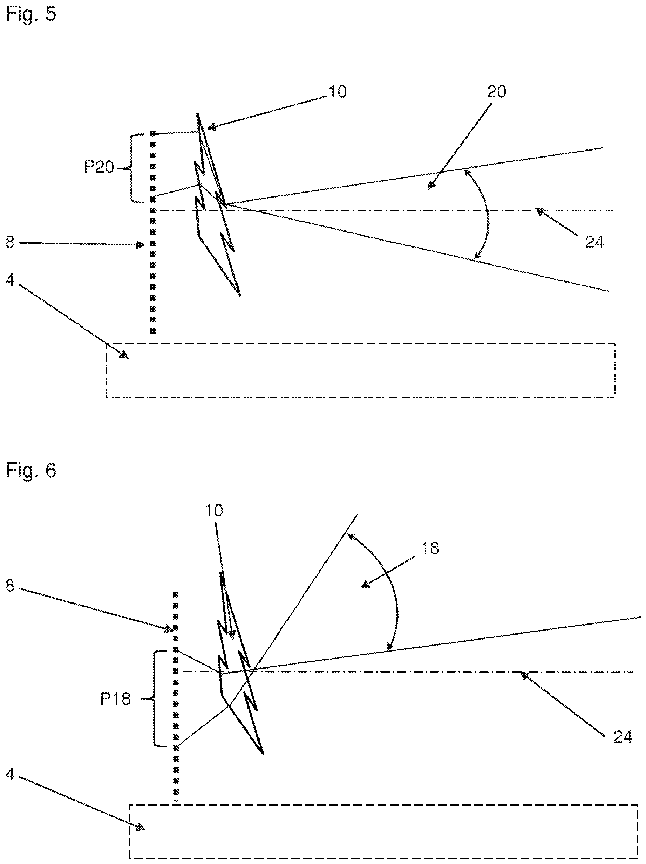

Die Realisierung der unterschiedlichen Winkelauflösungen für die beiden Sichtfeldbereiche 18, 20 erfolgt im Ausführungsbeispiel gemäß Fig. 3 und Fig. 4 mit Hilfe einer rotationssymmetrischen Optik 10, die in den Abbildungen durch eine einfache Linse repräsentiert wird, wobei die optische Achse 24 der rotationssymmetrischen Optik 10 quasi versetzt zum Bildsensor 8 angeordnet ist, sodass die optische Achse 24 nicht durch den Flächenschwerpunkt oder den Mittelpunkt der Messfläche oder Sensorfläche des Bildsensors 8 verläuft, sondern versetzt dazu am Flächenschwerpunkt vorbeigeführt ist. Zudem ist die Optik 10 im Vergleich zum Bildsensor 8 überdimensioniert, sodass die Optik 10 trotz der versetzten Anordnung den Bildsensor vollständig abdeckt. Durch eine solche Ausgestaltung lässt sich dann die von sphärischen Linsen bekannte sphärische Apparation gezielt nutzen, um hiermit die unterschiedlichen Winkelauflösungen zu realisieren. Alternativ kommt eine nicht-rotationssymmetrische Optik 10 zum Einsatz, die dann in den meisten Fällen mittig vor der Sensorfläche des Bildsensors 8 positioniert ist, so wie dies in Fig. 5 und Fig. 6 skizziert ist. Die Optik 10 weist in diesem Fall eine komplexere Geometrie auf, die sich auf prismatische Grundformen zurückführen lässt.

### Bezugszeichenliste

- 2: Fahrerassistenzsystem
- 4: Lastkraftwagen
- 6: Umfeldkamera
- 8: Bildsensor
- 10: Optik
- 12: Bildaufbereitungseinheit
- 14: Bildauswerteeinheit
- 16: Bildschirm
- 18: erster Sichtfeldbereich
- 20: zweiter Sichtfeldbereich
- 22: Flanke
- 24: optische Achse

- P18: Pixel auf denen der erste Sichtfeldbereich 18 abgebildet wird
- P20: Pixel auf denen der erste Sichtfeldbereich 20 abgebildet wird

## Patentansprüche

1. Fahrerassistenzsystem (2) für ein Kraftfahrzeug (4), insbesondere für einen Lastkraftwagen (4), umfassend eine Umfeldkamera (6) mit einem Bildsensor (8) und mit einer Optik (10), umfassend eine Bildaufbereitungseinheit (12) und umfassend ein Anzeigeelement (16) im Innenraum des Kraftfahrzeuges (4), die gemeinsam einen digitalen Außenspiegel ausbilden, wobei der digitale Außenspiegel derart eingerichtet ist, dass zumindest zwei Sichtfeldbereiche (18,20), nämlich ein erster Sichtfeldbereich (18) und ein zweiter Sichtfeldbereich (20), mit unterschiedlichen Abbildungsmaßstäben abgebildet werden, **dadurch gekennzeichnet, dass** der Bildsensor (8) der Umfeldkamera (6) hierfür zwei Bereiche aufweist, in denen die die Sensorfläche ausbildenden Pixel unterschiedlich gestaltet sind oder wobei mittels der Optik (10) die unterschiedliche Abbildungsmaßstäbe realisiert werden.

2. Fahrerassistenzsystem (2) nach Anspruch 1,
**dadurch gekennzeichnet,**
**dass** der digitale Außenspiegel derart eingerichtet ist, dass zumindest die zwei Sichtfeldbereiche (18,20) mit unterschiedlichen Winkelauflösungen abgebildet werden.

3. Fahrerassistenzsystem (2) nach Anspruch 1 oder 2,
**dadurch gekennzeichnet,**
**dass** die Umfeldkamera (6) zur Erfassung von elektromagnetischer Strahlung im Wellenlängenbereich zwischen etwa 300 nm und etwa 2000 nm ausgebildet ist.

4. Fahrerassistenzsystem (2) nach einem der Ansprüche 1 bis 3,
**dadurch gekennzeichnet,**
**dass** die Umfeldkamera (6) einen Wellenlängen-Bandpassfilter umfasst mit einem Passband von etwa 400 nm bis etwa 750 nm.

5. Fahrerassistenzsystem (2) nach einem der Ansprüche 1 bis 4,
**dadurch gekennzeichnet,**
**dass** die Optik (10) rotationssymmetrisch ausgestaltet ist und dass die Optik (10) und der Bildsensor (8) derart zueinander ausgerichtet sind, dass die optische Achse der Optik (10) am Flächenschwerpunkt der Messfläche des Bildsensors (8) vorbeigeführt ist.

6. Fahrerassistenzsystem (2) nach einem der Ansprüche 1 bis 4,
**dadurch gekennzeichnet,**
**dass** die Optik (10) nicht-rotationssymmetrisch ausgestaltet ist.

7. Fahrerassistenzsystem (2) nach einem der Ansprüche 1 bis 6,
**dadurch gekennzeichnet,**
**dass** der Bildsensor (8) eine Sensorfläche aufweist und dass die Optik (10) derart ausgebildet ist, dass der erste Sichtfeldbereich (18) wie von einem Weitwinkelobjektiv auf einen ersten Bereich (P18) der Sensorfläche abgebildet wird und dass der zweite Sichtfeldbereich (20) wie von einem Teleobjektiv auf einen zweiten Bereich (P20) der Sensorfläche abgebildet wird.

8. Fahrerassistenzsystem (2) nach einem der Ansprüche 1 bis 7,
**dadurch gekennzeichnet,**
**dass** der erste Sichtfeldbereich (18) einen Winkel größer 50°abdeckt und dass der zweite Sichtfeldbereich (20) einen Winkel kleiner 30°abdeckt.

9. Fahrerassistenzsystem (2) nach einem der Ansprüche 1 bis 8,
**dadurch gekennzeichnet,**
**dass** jeder genutzte Abbildungsmaßstab einem ganzzahligen, insbesondere geraden, Vielfachen eines Basismaßstabs entspricht.

10. Fahrerassistenzsystem (2) nach einem der Ansprüche 1 bis 9,
**dadurch gekennzeichnet,**
**dass** die Bildaufbereitungseinheit (12) derart eingerichtet ist, dass die Bilddaten der Umfeldkamera (6) umskaliert und insbesondere einer Rektifizierung unterzogen werden, bevor diese mittels des Anzeigeelements (16) wiedergegeben werden.

## Claims

1. A driver assistance system (2) for a motor vehicle (4), in particular for a truck (4), comprising an environment camera (6) with an image sensor (8) and an optical system (10), comprising an imaging unit (12), and comprising a display element (16) in the interior of the motor vehicle (4), which together form a digital exterior mirror, wherein the digital exterior mirror is constructed such that at least two visual field regions (18, 20), namely a first visual field region (18) and a second visual field region (20), are mapped with different image scales, **characterized in that** the image sensor (8) of the environment camera (6) has for this purpose two regions in which the pixels forming the sensor surface are configured differently, or wherein the different image scales are implemented by means of the optical system (10).

2. The driver assistance system (2) according to Claim 1,
**characterized**
**in that** the digital exterior mirror is constructed such that at least the two visual field regions (18, 20) are mapped with different angular resolutions.

3. The driver assistance system (2) according to Claim 1 or 2,
**characterized**
**in that** the environment camera (6) is designed to detect electromagnetic radiation in the wavelength range between approximately 300 nm and approximately 2000 nm.

4. The driver assistance system (2) according to any one of Claims 1 to 3,
**characterized**
**in that** the environment camera (6) comprises a wavelength band-pass filter with a passband of approximately 400 nm to approximately 750 nm.

5. The driver assistance system (2) according to any one of Claims 1 to 4,
**characterized**
**in that** the optical system (10) is designed as rotationally symmetrical, and in that the optical system (10) and the image sensor (8) are oriented relative to one another such that the optical axis of the optical system (10) is directed past the centroid of the measurement surface of the image sensor (8).

6. The driver assistance system (2) according to any one of Claims 1 to 4,
**characterized**
**in that** the optical system (10) is designed as non-rotationally symmetrical.

7. The driver assistance system (2) according to any one of Claims 1 to 6,
**characterized**
**in that** the image sensor (8) has a sensor surface, and in that the optical system (10) is designed such that the first visual field region (18) is mapped as from a wide-angle lens on a first region (P18) of the sensor surface, and in that the second visual field region (20) is mapped as from a telephoto lens on a second region (P20) of the sensor surface.

8. The driver assistance system (2) according to any one of Claims 1 to 7,
**characterized**
**in that** the first visual field region (18) covers an angle greater than 50°, and in that the second visual field region (20) covers an angle smaller than 30°.

9. The driver assistance system (2) according to any one of Claims 1 to 8,
**characterized**
**in that** each image scale used corresponds to an integer multiple, in particular an even multiple, of a basic scale.

10. The driver assistance system (2) according to any one of Claims 1 to 9,
**characterized**
**in that** the imaging unit (12) is constructed such that the image data of the environment camera (6) are rescaled and in particular undergo rectification before being reproduced by the display element (16).

## Revendications

1. Système d'assistance à la conduite (2) pour un véhicule automobile (4), en particulier pour un véhicule poids lourd (4), comprenant une caméra panoramique (6) avec un capteur d'image (8) et avec une optique (10), comprenant une unité de pré-traitement d'image (12) et comprenant un élément d'affichage (16) dans l'habitacle du véhicule automobile (4), qui forment ensemble un rétroviseur extérieur numérique, ledit rétroviseur extérieur numérique étant prévu de telle manière que sont représentés au moins deux champs optiques (18,20), en occurrence un premier champ optique (18) et un deuxième champ optique (20), avec des échelles de représentation différentes,
**caractérisé**
**en ce que** le capteur d'image (8) de la caméra panoramique (6) présente à cet effet deux zones dans lesquelles les pixels formant la surface de capteur sont différemment configurés, ou **en ce que** les échelles de représentation différentes sont réalisées au moyen de l'optique (10).

2. Système d'assistance à la conduite (2) selon la revendication 1,
**caractérisé**
**en ce que** le rétroviseur extérieur numérique est prévu de telle manière qu'au moins les deux champs optiques (18,20) sont représentés avec des résolutions angulaires différentes.

3. Système d'assistance à la conduite (2) selon la revendication 1 ou la revendication 2,
**caractérisé**
**en ce que** la caméra panoramique (6) est prévue pour détecter un rayonnement électromagnétique d'une longueur d'onde comprise entre environ 300 nm et environ 2000 nm.

4. Système d'assistance à la conduite (2) selon l'une des revendications 1 à 3,
**caractérisé**
**en ce que** la caméra panoramique (6) comprend un filtre passe-bande laissant passer les longueurs d'onde comprises entre environ 400 nm et environ 750 nm.

5. Système d'assistance à la conduite (2) selon l'une des revendications 1 à 4,
**caractérisé**
**en ce que** l'optique (10) est réalisée à symétrie de révolution, et **en ce que** l'optique (10) et le capteur d'image (8) sont orientés l'une par rapport à l'autre de manière à faire passer l'axe optique de l'optique (10) devant le centroïde de la surface de mesure du capteur d'image (8).

6. Système d'assistance à la conduite (2) selon l'une des revendications 1 à 4,
**caractérisé**
**en ce que** l'optique (10) n'est pas réalisée à symétrie de révolution.

7. Système d'assistance à la conduite (2) selon l'une des revendications 1 à 6,
**caractérisé**
**en ce que** le capteur d'image (8) présente une surface de capteur et **en ce que** l'optique (10) est réalisée de telle manière que le premier champ optique (18) est représenté comme provenant d'un objectif grand angle dans une première zone (P18) de la surface de capteur et que le deuxième champ optique (20) est représenté comme provenant d'un téléobjectif dans une deuxième zone (P20) de la surface de capteur.

8. Système d'assistance à la conduite (2) selon l'une des revendications 1 à 7,
**caractérisé**
**en ce que** le premier champ optique (18) couvre un angle supérieur à 50°, et que le deuxième champ optique (20) couvre un angle inférieur à 30°.

9. Système d'assistance à la conduite (2) selon l'une des revendications 1 à 8,
**caractérisé**
**en ce que** chaque échelle de représentation utilisée correspond au multiple entier, en particulier pair, d'une échelle de base.

10. Système d'assistance à la conduite (2) selon l'une des revendications 1 à 9,
**caractérisé**
**en ce que** l'unité de pré-traitement d'image (12) est prévue de telle manière que les données d'image de la caméra panoramique (6) sont recalculées et en particulier soumises à une rectification avant d'être représentées au moyen de l'élément d'affichage (16).
